# EUROPEAN PATENT SPECIFICATION

(11) **EP 2 880 110 B1**
(45) Date of publication and mention of the grant of the patent: **08.06.2016**
(21) Application number: 13750959.2
(22) Date of filing: 02.08.2013
(51) Int. Cl.: C09D 179/08, C09D 133/24, C08K 5/37, C08L 79/08

(54) **COATING COMPOSITION CONTAINING POLYAMIDE-IMIDE RESIN**
BESCHICHTUNGSZUSAMMENSETZUNG MIT EINEM POLYAMID-IMID-HARZ
COMPOSITION DE REVÊTEMENT CONTENANT UNE RÉSINE POLYAMIDE-IMIDE

(30) Priority: 02.08.2012 JP 2012172050
(43) Date of publication of application: 10.06.2015
(73) Proprietor: Dow Corning Toray Co., Ltd., Tokyo 100-0004 (JP)
(72) Inventor: YAMAGUCHI, Tetsuji, Ashigarakami-gun Kagawa 258-0112 (JP); YAMASHITA, Jiro, Ashigarakami-gun Kagawa 258-0112 (JP)
(74) Representative: Donlan, Andrew Michael
(86) International application number: PCT/JP2013/071583
(87) International publication number: WO 2014/021477

(56) References cited:
- EP-A1- 0 549 494
- WO-A1-2006/088272

## Description

### Technical Field

The present invention relates to a coating composition containing a polyamide-imide resin.

Priority is claimed on Japanese Patent Application No. 2012-172050, filed on August 2, 2012, the content of which is incorporated herein by reference.

### Background Art

Polyamide-imide resins are resin materials exhibiting excellent heat resistance and mechanical strength. Polyamide-imide resins are therefore used as binder components for coating compositions having lubricating properties.

Conventionally, polyamide-imide resins have been synthesized using amide-based solvents such as N-methylpyrrolidone (NMP), N-ethylpyrrolidone (NEP), N,N-dimethylacetamide, and N,N-dimethylformamide. This is because amide-based solvents have excellent polyamide-imide resin solubility as well as excellent handleability as solvents.

However, there is a concern that amide-based solvents have reproductive toxicity, and there is a trend to regulate the use thereof primarily in Europe. Accordingly, there is a need to identify solvents suitable for use in the manufacture of polyamide-imide resins and in subsequent uses of the resulting resins to replace amide-based solvents.

For example, in Japanese Unexamined Patent Application Publication No. 2008-285660, a polyamide-imide resin formed by polymerization in a polymerization solvent consisting of only γ-butyrolactone (GBL) instead of an amide-based solvent and a polyamide-imide resin composition containing the polyamide-imide resin are proposed.
In Japanese Unexamined Patent Application Publication No. 2012-62355, a polyamide-imide resin composition dissolved in a solvent containing γ-butyrolactone and cyclopentanone is proposed, and a coating composition containing a solid lubricant is further proposed.

In Japanese Unexamined Patent Application Publication No. 2007-270074, 1,3-dimethyl-2-imidazolidinone is used as a solvent when producing a polyamide-imide resin. Further, in Japanese Unexamined Patent Application Publication No. 2011-210645, y-butyrolactone and dimethylimidazolidinone are proposed as a solvent for forming a polyamide-imide resin coating.

However, when a polyamide-imide resin composition using γ-butyrolactone as a solvent is used as a binder for a lubricant in that the lubrication durability on a product treated therewith is diminished in comparison to cases in which amide-based solvents are used.

The present invention was conceived in order to solve the problem described above, and the object of the present invention is to provide a coating composition containing a polyamide-imide resin which does not raise any concern about reproductive toxicity and which has excellent lubrication durability.

### Disclosure of Invention

The present inventors arrived at the present invention as a result of conducting dedicated research in order to achieve the objective described above. That is, the object of the present invention is achieved by a coating composition comprising:
(a) a resin solution containing a polyamide-imide resin and a solvent having a urea bond; and
(b) a powdered solid lubricant.

The solvent having a urea bond preferably has a structure represented by the following chemical formula (A): 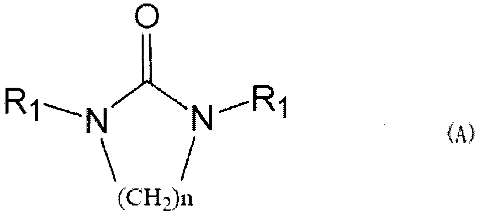 (where R₁ represents a saturated hydrocarbon group having from 1 to 9 carbons and "n" represents an integer from 1 to 10),
and it is particularly preferable for R₁ to be a saturated hydrocarbon group having from 1 to 3 carbons and for "n" to be an integer from 2 to 5.

The content of the polyamide-imide resin in the resin solution is for example from 10 to 60% by mass and alternatively from 10 to 50% by mass.

The polyamide-imide resin is preferably prepared by polymerizing a diisocyanate compound and a trivalent carboxylic acid derivative having an acid anhydride group in a solvent having a urea bond.

The solid lubricant is preferably at least one type selected from the group consisting of fluorine resins, molybdenum disulfide, and graphite.

The average primary particle size of the solid lubricant is for example from 0.1 to 20 µm and alternatively from 0.1 to 10 µm.

The content of the solid lubricant in the total solid is for example from 5 to 90% by mass and alternatively from 10 to 70% by mass.

### Effects of Invention

With the present invention, it is possible to provide a coating composition containing a polyamide-imide resin which has excellent lubrication durability without using an amide-based solvent.

### Detailed Description of the Invention

The coating composition of the present invention is a coating composition comprising:
(a) a resin solution containing a polyamide-imide resin and a solvent having a urea bond; and
(b) a solid lubricant.

The solvent having a urea bond in the present invention is not particularly limited as long as it is a solvent which dissolves the polyamide-imide resin, but the solvent preferably has a structure represented by the following chemical formula (A): 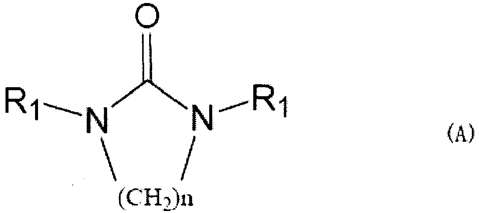 (where R₁ represents a saturated hydrocarbon group having from 1 to 9 carbons and "n" represents an integer from 1 to 10).

Examples of the saturated hydrocarbon group of R₁ include straight-chain or branched alkyl groups such as methyl groups, ethyl groups, n-propyl groups, isopropyl groups, n-butyl groups, isobutyl groups, sec-butyl groups, tert-butyl groups, pentyl groups, hexyl groups, and heptyl groups. A saturated hydrocarbon group having from 1 to 3 carbons is particularly preferable.

"n" represents an integer from 1 to 10, but alternatively an integer from 2 to 5.

Examples of the solvent having a urea bond used in the present invention include the following compounds: 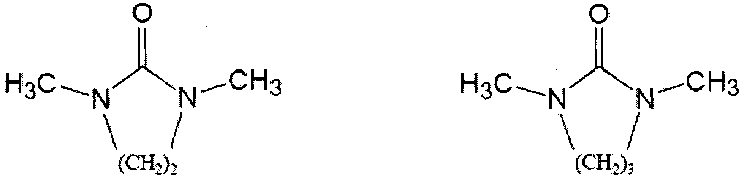 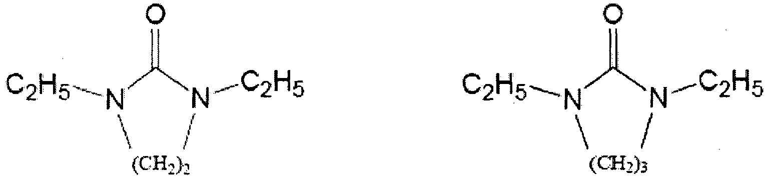 These solvents may be used alone or as a mixture if necessary.

The polyamide-imide resin of the present invention is not particularly limited as long as it is a polymer having an amide bond and an imide bond in the molecule, but the polyamide-imide resin can be prepared, for example, by polymerizing a diisocyanate compound and a trivalent carboxylic acid derivative having an acid anhydride group in a solvent having a urea bond.

Examples of the diisocyanate compound used in the preparation of the polyamide-imide resin include compounds represented by the following chemical formulas: 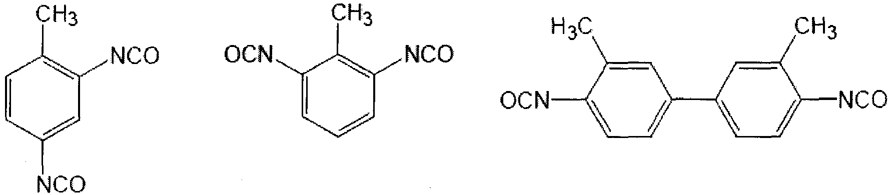 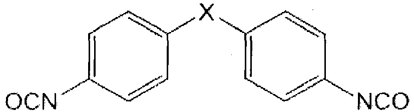 (where X represents O or CH₂).

Specific examples of diisocyanate compounds include 4,4'-diphenylmethane diisocyanate, 4,4'-diphenylether diisocyanate, xylylene diisocyanate, 3,3'-dimethylbiphenyl-4,4'-diisocyanate, 3,3'-diphenylmethane diisocyanate, 3,3'-dimethoxybiphenyl-4,4'-diisocyanate, paraphenylene diisocyanate, hexamethylene diisocyanate, tolylene diisocyanate, naphthalene diisocyanate, and tolylene diisocyarate. It is preferable to use an aromatic compound from the perspective of the mechanical properties, and 4,4'-diphenylmethane diisocyanate and tolylene diisocyanate are particularly preferable. These diisocyanate compounds may be used alone or as a mixture if necessary.

The trivalent carboxylic acid derivative having an acid anhydride group used in the preparation of the polyamide-imide resin is not particularly limited as long as it is a derivative of a trivalent carboxylic acid having an acid anhydride group which reacts with isocyanate groups or amino groups, and examples include compounds represented by the following chemical formulas: 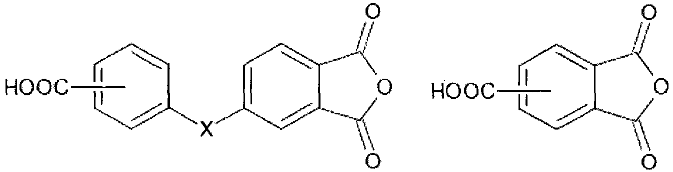 (where X represents CH₂, CO, SO₂ or O).
A trimellitic acid anhydride is preferable. These trivalent carboxylic acid derivatives having acid anhydride groups may be used alone or as a mixture if necessary.

The polyamide-imide resin may also be prepared by further adding and polymerizing at least one type of a dicarboxylic acid compound or diol compound and/or a tetravalent carboxylic acid derivative having two acid anhydride groups as polymerization components.

Examples of the dicarboxylic acid compound used in the preparation of the polyamide-imide resin include aromatic dicarboxylic acids such as phthalic acid, isophthalic acid, terephthalic acid, naphthalene dicarboxylic acid, and oyxdibenzoic acid and aliphatic dicarboxylic acids such as succinic acid, glutaric acid, adipic acid, azelaic acid, suberic acid, sebacic acid, decanedioic acid, dodecanedioc acid, and cyclohexane dicarboxylic acid. An adipic acid is preferable from the perspective of the balance of the mechanical properties. These dicarboxylic acid compounds may be used alone or as a mixture if necessary.

Examples of the diol compound used in the preparation of the polyamide-imide resin include aromatic diol compounds such as resorcinol, hydroquinones, biphenyl diols, bisphenol A, naphthalene diols, aromatic polycarbonate diols, and derivatives of aromatic polycarbonate diols such as aromatic polycarbonate diol-chloroformic acid diesters and aliphatic diol compounds such as ethylene glycol, 1,4-butane diol, 1,6-hexane diol, aliphatic polycarbonate diols, and derivatives of aliphatic polycarbonate diols such as aliphatic polycarbonate diol-chloroformic acid diesters. It is preferable to copolymerize at least one type of monomer selected from the group consisting of aliphatic polycarbonate diols or derivatives thereof. These diol compounds may be used alone or as a mixture if necessary.

An aliphatic polycarbonate diol or a derivative thereof has the function of improving the workability and adhesiveness of the coating, and the content in the polyamide-imide resin is preferably from 1 to 50 mol% and particularly preferably from 5 to 30 mol%. When the content of the aliphatic polycarbonate diol or a derivative thereof in the polyamide-imide is within the range described above, it is possible to impart sufficient workability and adhesiveness to the coating. When the content of the aliphatic polycarbonate diol or a derivative thereof exceeds 50 mol%, the solvent resistance tends to be diminished.

Examples of commercially available aliphatic polycarbonate diols or derivatives thereof include trade names PLACCEL CD-205, 205PL, 205HL, 210, 210PL, 210HL, 220, 220PL, and 220HL produced by Daicel Chemical Industries, Ltd., and these may be used alone or as a mixture if necessary.

Examples of the tetravalent carboxylic acid derivative having two acid anhydride groups used in the preparation of the polyamide resin include biphenyl tetracarboxylic acid dianhydride, pyromellitic anhydride, oxydiphthalic acid dianhydride, benzophenone tetracarboxlic acid dianhydride, diphenyl sulfone tetracarboxylic acid dianhydride, (hexafluoroisopropylidene)diphthalic acid dianhydride, and terphenyl tetracarboxylic acid dianhydride. These tetravalent carboxylic acid derivatives having two acid anhydride groups may be used alone or as a mixture if necessary.

In addition to the compounds described above, hydroxynaphthoic acid, oxynaphthoic acid, hydroxybiphenyl carboxylic acid, 1,2-aminododecanoic acid, trimethylolethane, trimethylolpropane, gluconic acid, lactic acid, fumaric acid, DL-malic acid, xylitol, D-sorbitol, and DL-alanine may be further added and polymerized as necessary.

From the perspective of the molecular weight and the degree of crosslinking of the polyamide-imide resin to be produced, the compounded amount of the diisocyanate compound, the trivalent carboxylic acid derivative having an acid anhydride group, the dicarboxylic acid compound or diol compound, and the tetravalent carboxylic acid derivative having two acid anhydride groups is preferably such that the amount of the diisocyanate compound is from 0.8 to 1 mole, alternatively from 0.95 to 1.08 moles, and further alternatively from 1.0 to 1.08 moles with respect to a total of 1.0 mole of the trivalent carboxylic acid derivative having an acid anhydride group and, if present, the tetracarboxylic acid derivative having two acid anhydride groups.

The compounding ratio of the trivalent carboxylic acid derivative having an acid anhydride group and the dicarboxylic acid is preferably from 0.95:0.05 to 0.50:0.50, alternatively from 0.85:0.15 to 0.60:0.40, and alternatively from 0.75:0.25 to 0.65:0.35 as an equivalence ratio. When the compounding ratio is less than 0.95:0.05, the flexibility of the coating film tends to be diminished, whereas when the compounding ratio exceeds 0.50:0.50, the heat resistance tends to be diminished.

The polyamide-imide resin of the present invention can be prepared by, but is not limited to, the following methods, for example.
(1) Method of obtaining a polyamide-imide resin by reacting the diisocyanate compound, the trivalent carboxylic acid derivative having an acid anhydride group, and, if present, the dicarboxylic acid compound or diol compound and the tetracarboxylic acid derivative having two acid anhydride groups all at once;
(2) Method of obtaining a polyamide-imide resin by first reacting the dicarboxylic acid compound or diol compound and an excessive amount of the isocyanate compound to synthesize an oligomer having isocyanate groups at the ends and then adding and reacting the trivalent carboxylic acid derivative having an acid anhydride group and, if necessary, the tetracarboxylic acid derivative having two acid anhydride groups; and
(3) Method of obtaining a polyamide-imide resin by reacting the isocyanate compound and an excessive amount of the trivalent carboxylic acid derivative having an acid anhydride group and, if necessary, the tetracarboxylic acid derivative having two acid anhydride groups to synthesize an oligomer having acids or acid anhydride groups at the ends and then adding and reacting the dicarboxylic compound or diol compound.

The number-average molecular weight of the polyamide-imide resin of the present invention is for example from 10,000 to 75,000, alternatively from 15,000 to 50,000, and further alternatively from 20,000 to 35,000. When the number-average molecular weight of the polyamide-imide resin is less than 10,000, the strength of the coating film tends to be diminished, whereas when the number-average molecular weight exceeds 75,000, the viscosity of the coating composition increases and the operability at the time of coating is diminished. The number-average molecular weight of the polyamide-imide resin is sampled at the time of the synthesis of the resin and measured with a gel permeation chromatograph (GPC) using the calibration curve of standard polystyrene.

The resin solution of the present invention is a solution in which a polyamide-imide resin is dissolved in a solvent having a urea bond, and the content of the polyamide-imide resin in the resin solution is preferably from 10 to 60% by mass and particularly preferably from 10 to 50% by mass. When the content of the polyamide-imide resin in the resin solution is within the range described above, it is possible to impart sufficient lubricating properties and abrasion resistance to the coating.

The powdered solid lubricant of the present invention has the function of improving the slidability of the coating. Examples of solid lubricants include organic microparticles such as fluorine resins, polyolefins, and polyamides and inorganic microparticles such as sulfides, graphite, boron nitride, and metal oxides. Specific examples include polytetrafluoroethylene, tetrafluoroethylene-perfluoroalkyl vinyl ether copolymers, tetrafluoroethylene-hexafluoropropylene copolymers, tetrafluoroethylene-ethylene copolymers, polyvinylidene fluoride, polychlorotrifluoroethylene, polyethylene, polyamide, molybdenum disulfide, tungsten disulfide, graphite, hexagonal boron nitride, aluminum oxide, and zinc oxide. It is preferable to use at least one type selected from the group consisting of fluorine resins, molybdenum disulfide, and graphite.

The average primary particle diameter of the solid lubricant of the present invention can be measured by observations using an electron microscope or with a laser diffraction and scattering method. The average primary particle diameter of the solid lubricant is preferably from 0.1 to 20 µm and particularly preferably from 0.1 to 10 µm.

The content of the solid lubricant of the present invention in the total solid is preferably from 5 to 90% by mass and particularly preferably from 10 to 70% by mass. When the content of the solid lubricant is within the range described above, it is possible to sufficiently improve the lubricating properties and the lubrication durability of the coating.

The coating composition of the present invention may also contain one or more types of additives such as a UV absorber, a photostabilizer, an antioxidant, a thermal polymerization inhibitor, a leveling agent, an anti-foaming agent a thickening agent, an anti-settling agent, a pigment (an organic coloration pigment or an inorganic pigment), a coloration dye, an infrared radiation absorber, an optical brightener, a dispersing agent, conductive microparticles, an antistatic agent, an antifogging agent, a coupling agent, and the like, if necessary, as long as the object of the present invention is not inhibited.

The coating composition of the present invention may be applied with any method. Examples of coating methods that can be used include dipping methods, spincoat methods, flowcoat methods, spraying methods, bar-coating methods, gravure coating methods, roll coating methods, blade coating methods, air knife coating methods, and the like. A thickness of the coating film is not particularly limited, but the thickness is preferably from 1 to 50 µm and more preferably from 5 to 30 µm. After application, the coating film may be dried to remove the solvent and, if necessary, baked.

### Examples

The present invention is described in detail below based on practical examples, but the present invention is not limited to the practical examples.

### [Practical Example 1]

Powdered graphite was added to a polyamide-imide resin solution (produced by Hitachi Chemical Co., Ltd., solid content: approximately 30% by mass) containing a polyamide-imide resin dissolved in 1,3-dimethyl-2-imidazolidinone (DMI) prepared in DMI, so that the content of the powdered graphite was 50 parts by mass per 100 parts by mass of the polyamide-imide resin, and mixed at room temperature. This mixture was diluted using DMI so that the solid content concentration was 15% by mass to form a coating composition to be used in evaluation tests.

### [Comparative Example 1]

A polyamide-imide resin solution (produced by Hitachi Chemical Co., Ltd., HPC-3010) in which a polyamide-imide resin was dissolved in γ-butyrolactone (GBL) was used, and powdered graphite was added, so that the content of the powdered graphite was 50 parts by mass per 100 parts by mass of the polyamide-imide resin, and mixed at room temperature. This mixture was diluted using GBL so that the solid content concentration was 15% by mass to form a coating composition to be used in evaluation tests.

### [Comparative Example 2]

A coating composition to be used in evaluation tests was formed in the same manner as in Practical Example 1 with the exception that the powdered graphite was replaced with silica (organo silica sol: DMI solution: solid content of approximately 20% by mass).

### [Reference Example 1]

A polyamide-imide resin solution (produced by Hitachi Chemical Co., Ltd., HPC-5000) in which a polyamide-imide resin was dissolved in N-methylpyrrolidone (NMP) was used, and powdered graphite was added, so that the content of the powdered graphite was 50 parts by mass per 100 parts by mass of the polyamide-imide resin, and mixed at room temperature. This mixture was diluted using NMP so that the solid content concentration was 15% by mass to form a coating composition to be used in evaluation tests.

### [Coating method]

The resulting coating composition was spray-coated onto a test piece (ring) subjected to sandblasting treatment in advance. After the test piece was dried for 10 minutes at 80°C, the test piece was baked for 30 minutes at 240°C to obtain a test piece for testing.

### [Evaluation method]

Sliding tests were performed under the following conditions using a block-on-ring tester (LFW-1 tester), and the number of cycles until the coefficient of friction increased substantially was measured. Tests were performed with n=2, and the results are shown in Table 1 as the arithmetic mean thereof.

### [Sliding test conditions]

Ring: SAE 4620 Steel, RC 58-63, 22-28 rms
Block: SAE 01 Steel, RC 58-63, 4-8 rms
Sliding environment: immersion in 10W-30 engine oil
Load: 272 N
Speed: 72 rpm

**Table 1: Test results**

| | Practical Example 1 | Comparative Example 1 | Comparative Example 2 | Reference Example 1 |
|---|---|---|---|---|
| Lubrication durability | 10100 | 1370 | 3400 | 10070 |

As is clear from Table 1, it was ascertained that when the coating composition of Practical Example 1 using 1,3-dimethyl-2-imidazolidinone as a solvent is used, the coating composition has excellent lubrication durability equivalent to or better than when N-methylpyrrolidone is used as a solvent. On the other hand, when the coating composition of Comparative Example 1 using γ-butyrolactone as a solvent was used, the lubrication durability was substantially diminished. When the solid lubricant was changed from powdered graphite to an organo silica sol, the lubrication durability was diminished.

### Industrial Applicability

The coating composition of the present invention can be suitably used in the sliding members of various devices which require excellent slidability and lubrication durability. For example, the coating composition can be used for the surface treatment of crank shafts, slide bearings, pistons, gaskets, gears, door panels, instrument panels, door looks, timing belts, and body seals, glass runs, and weather stripping for sunroofs.

## Claims

1. A coating composition comprising:
(a) a resin solution containing a polyamide-imide resin and a solvent having a urea bond; and
(b) a powdered solid lubricant.

2. The coating composition according to claim 1, wherein the solvent having a urea bond has a structure represented by the following chemical formula (A): 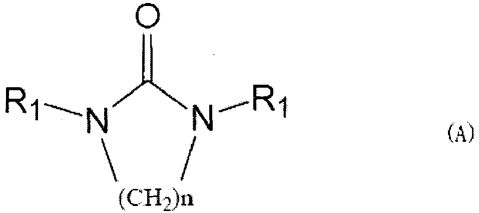 (where R₁ represents a saturated hydrocarbon group having from 1 to 9 carbons and "n" represents an integer from 1 to 10).

3. The coating composition according to claim 2, wherein R₁ is a saturated hydrocarbon group having from 1 to 3 carbons and "n" is an integer from 2 to 5 in the solvent having the structure represented by chemical formula (A).

4. The coating composition according to any one of claims 1 to 3, wherein the content of the polyamide-imide resin in the resin solution is from 10 to 60% by mass.

5. The coating composition according to claim 4, wherein the content of the polyamide-imide resin in the resin solution is from 10 to 50% by mass.

6. The coating composition according to any one of claims 1 to 5, wherein the polyamide-imide resin is obtainable by polymerizing a diisocyanate compound and a trivalent carboxylic acid derivative having an acid anhydride group in a solvent having a urea bond.

7. The coating composition according to claim 6, wherein the polyamide-imide resin is obtainable by reacting a diisocyanate compound, a trivalent carboxylic acid derivative having an acid anhydride group, and, optionally, a dicarboxylic acid compound or diol compound and a tetracarboxylic acid derivative having two acid anhydride groups simultaneously.

8. The coating composition according to claim 6, wherein the polyamide-imide resin is obtainable by first reacting a dicarboxylic acid compound or diol compound and an excessive amount of an isocyanate compound to synthesize an oligomer having isocyanate groups at the ends and then adding and reacting a trivalent carboxylic acid derivative having an acid anhydride group and, if necessary, the tetracarboxylic acid derivative having two acid anhydride groups.

9. The coating composition according to claim 6, wherein the polyamide-imide resin is obtainable by reacting an isocyanate compound and an excessive amount of a trivalent carboxylic acid derivative having an acid anhydride group and, optionally a tetracarboxylic acid derivative having two acid anhydride groups to synthesize an oligomer having acids or acid anhydride end groups and then adding and reacting a dicarboxylic compound or diol compound.

10. The coating composition according to any one of claims 1 to 9, wherein the solid lubricant is at least one type selected from the group consisting of fluorine resins, molybdenum disulfide, and graphite.

11. The coating composition according to any one of claims 1 to 10, wherein an average primary particle diameter of the solid lubricant is from 0.1 to 20 µm.

12. The coating composition according to claim 11, wherein the average primary particle diameter of the solid lubricant is from 0.1 to 10 µm.

13. The coating composition according to any one of claims 1 to 12, wherein the content of the solid lubricant in the total solid is from 5 to 90% by mass.

14. The coating composition according to claim 13, wherein the content of the solid lubricant in the total solid is from 10 to 70% by mass.

15. Use of the coating composition according to any one of claims 1 to 14 as a lubricant.

16. Use according to claim 15 for the surface treatment of crank shafts, slide bearings, pistons, gaskets, gears, door panels, instrument panels, door looks, timing belts, and body seals, glass runs, and weather stripping for sunroofs.

## Patentansprüche

1. Beschichtungszusammensetzung, umfassend:
(a) eine Harzlösung, enthaltend ein Polyamidimid-Harz und ein Lösungsmittel, das eine Harnstoffbindung aufweist; und
(b) ein pulverförmiges festes Gleitmittel.

2. Beschichtungszusammensetzung nach Anspruch 1, wobei das Lösungsmittel, das eine Harnstoffbindung aufweist, eine Struktur aufweist, die durch die folgende chemische Formel (A) dargestellt wird: 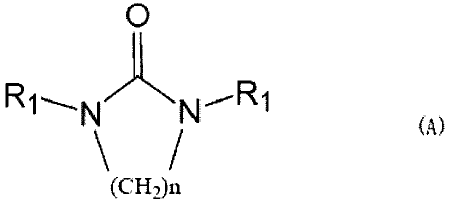 (worin R₁ für eine gesättigte Kohlenwasserstoffgruppe mit 1 bis 9 Kohlenstoffen steht und "n" für eine ganze Zahl von 1 bis 10 steht).

3. Beschichtungszusammensetzung nach Anspruch 2, wobei in dem Lösungsmittel, welches die durch die chemische Formel (A) dargestellte Struktur aufweist, R₁ eine gesättigte Kohlenwasserstoffgruppe mit 1 bis 3 Kohlenstoffen ist und "n" eine ganze Zahl von 2 bis 5 ist.

4. Beschichtungszusammensetzung nach einem der Ansprüche 1 bis 3, wobei der Gehalt des Polyamidimid-Harzes in der Harzlösung von 10 bis 60 Masse-% beträgt.

5. Beschichtungszusammensetzung nach Anspruch 4, wobei der Gehalt des Polyamidimid-Harzes in der Harzlösung von 10 bis 50 Masse-% beträgt.

6. Beschichtungszusammensetzung nach einem der Ansprüche 1 bis 5, wobei das Polyamidimid-Harz erhältlich ist durch Polymerisieren einer Diisocyanatverbindung und eines dreiwertigen Carbonsäurederivats, das eine Säureanhydridgruppe aufweist, in einem Lösungsmittel, das eine Harnstoffbindung aufweist.

7. Beschichtungszusammensetzung nach Anspruch 6, wobei das Polyamidimid-Harz erhältlich ist durch Umsetzen einer Diisocyanatverbindung, eines dreiwertigen Carbonsäurederivats, das eine Säureanhydridgruppe aufweist, und wahlweise einer Dicarbonsäureverbindung oder Diolverbindung und eines Tetracarbonsäurederivats, das zwei Säureanhydridgruppen gleichzeitig aufweist.

8. Beschichtungszusammensetzung nach Anspruch 6, wobei das Polyamidimid-Harz erhältlich ist, indem zuerst eine Dicarbonsäureverbindung oder Diolverbindung und eine überschüssige Menge einer Isocyanatverbindung umgesetzt werden, um ein Oligomer zu synthetisieren, das Isocyanatgruppen an den Enden aufweist, und anschließend ein dreiwertiges Carbonsäurederivat, das eine Säureanhydridgruppe aufweist, und, falls notwendig, das Tetracarbonsäurederivat, das zwei Säureanhydridgruppen aufweist, hinzugegeben und umgesetzt werden.

9. Beschichtungszusammensetzung nach Anspruch 6, wobei das Polyamidimid-Harz erhältlich ist, indem eine Isocyanatverbindung und eine überschüssige Menge eines dreiwertigen Carbonsäurederivats, das eine Säureanhydridgruppe aufweist, und wahlweise ein Tetracarbonsäurederivat, das zwei Säureanhydridgruppen aufweist, umgesetzt werden, um ein Oligomer zu synthetisieren, das Säuren oder Säureanhydridendgruppen aufweist, und anschließend eine Dicarbonsäureverbindung oder Diolverbindung hinzugegeben und umgesetzt wird.

10. Beschichtungszusammensetzung nach einem der Ansprüche 1 bis 9, wobei das feste Gleitmittel mindestens ein Typ ist, der ausgewählt ist aus der Gruppe bestehend aus Fluorharzen, Molybdändisulfid und Graphit.

11. Beschichtungszusammensetzung nach einem der Ansprüche 1 bis 10, wobei ein durchschnittlicher primärer Teilchendurchmesser des festen Gleitmittels von 0,1 bis 20 µm beträgt.

12. Beschichtungszusammensetzung nach Anspruch 11, wobei der durchschnittliche primäre Teilchendurchmesser des festen Gleitmittels von 0,1 bis 10 µm beträgt.

13. Beschichtungszusammensetzung nach einem der Ansprüche 1 bis 12, wobei der Gehalt des festen Gleitmittels in dem gesamten Feststoff von 5 bis 90 Masse-% beträgt.

14. Beschichtungszusammensetzung nach Anspruch 13, wobei der Gehalt des festen Gleitmittels in dem gesamten Feststoff von 10 bis 70 Masse-% beträgt.

15. Verwendung der Beschichtungszusammensetzung nach einem der Ansprüche 1 bis 14 als Gleitmittel.

16. Verwendung nach Anspruch 15 zur Oberflächenbehandlung von Kurbelwellen, Gleitlagern, Kolben, Dichtungen, Zahnrädern, Türverkleidungen, Instrumententafeln, Türschlössern, Zahnriemen und Gehäusedichtungen, Glasführungen und Gummidichtungen für Schiebedächer.

## Revendications

1. Composition de revêtement comprenant :
(a) une solution de résine contenant une résine polyamide-imide et un solvant comprenant une liaison urée ; et
(b) un lubrifiant solide en poudre.

2. Composition de revêtement selon la revendication 1, dans laquelle le solvant comprenant une liaison urée a une structure représentée par la formule chimique (A) ci-après : 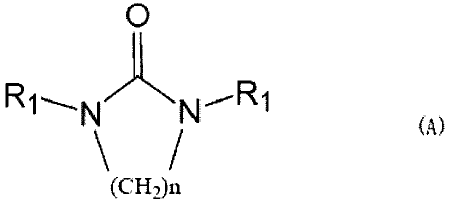 (dans laquelle R₁ représente un groupe hydrocarboné saturé ayant de 1 à 9 atomes de carbone et « n » représente un entier de 1 à 10).

3. Composition de revêtement selon la revendication 2, dans laquelle R₁ est un groupe hydrocarboné saturé ayant de 1 à 3 atomes de carbone et « n » est un entier de 2 à 5 dans le solvant ayant la structure représentée par la formule chimique (A).

4. Composition de revêtement selon l'une quelconque des revendications 1 à 3, dans laquelle la teneur en résine polyamide-imide dans la solution de résine va de 10 à 60 % en masse.

5. Composition de revêtement selon la revendication 4, dans laquelle la teneur en résine polyamide-imide dans la solution de résine va de 10 à 50 % en masse.

6. Composition de revêtement selon l'une quelconque des revendications 1 à 5, la résine polyamide-imide pouvant être obtenue en polymérisant un composé diisocyanate et un dérivé acide carboxylique trivalent ayant un groupe anhydride d'acide, dans un solvant comprenant une liaison urée.

7. Composition de revêtement selon la revendication 6, dans laquelle la résine polyamide-imide peut être obtenue en faisant réagir simultanément un composé diisocyanate, un dérivé acide carboxylique trivalent ayant un groupe anhydride d'acide et, facultativement, un composé acide dicarboxylique ou un composé diol et un dérivé acide tétracarboxylique ayant deux groupes anhydride d'acide.

8. Composition de revêtement selon la revendication 6, la résine polyamide-imide pouvant être obtenue en faisant d'abord réagir un composé acide dicarboxylique ou un composé diol avec un excès de composé isocyanate afin de synthétiser un oligomère ayant des groupes isocyanate aux extrémités, puis en ajoutant et en faisant réagir un dérivé acide carboxylique trivalent ayant un groupe anhydride d'acide et, si nécessaire, le dérivé acide tétracarboxylique ayant deux groupes anhydride d'acide.

9. Composition de revêtement selon la revendication 6, dans laquelle la résine polyamide-imide peut être obtenue en faisant réagir un composé isocyanate avec un excès de dérivé acide carboxylique trivalent ayant un groupe anhydride d'acide et, facultativement, un dérivé acide tétracarboxylique ayant deux groupes anhydride d'acide afin de synthétiser un oligomère ayant des groupes terminaux acides ou anhydride d'acide, puis en ajoutant et en faisant réagir un composé dicarboxylique ou un composé diol.

10. Composition de revêtement selon l'une quelconque des revendications 1 à 9, dans laquelle le lubrifiant solide est au moins un type choisi dans le groupe constitué de résines fluorées, de disulfure de molybdène et de graphite.

11. Composition de revêtement selon l'une quelconque des revendications 1 à 10, dans laquelle un diamètre moyen de particule primaire du lubrifiant solide va de 0,1 à 20 µm.

12. Composition de revêtement selon la revendication 11, dans laquelle le diamètre moyen de particule primaire du lubrifiant solide va de 0,1 à 10 µm.

13. Composition de revêtement selon l'une quelconque des revendications 1 à 12, dans laquelle la teneur en lubrifiant solide dans le solide total va de 5 à 90 % en masse.

14. Composition de revêtement selon la revendication 13, dans laquelle la teneur en lubrifiant solide dans le solide total va de 10 à 70 % en masse.

15. Utilisation de la composition de revêtement selon l'une quelconque des revendications 1 à 14 en tant que lubrifiant.

16. Utilisation selon la revendication 15 pour le traitement de surface de vilebrequins, paliers coulissants, pistons, joints, engrenages, panneaux de portes, panneaux d'instruments, serrures de portes, courroies de synchronisation, et de joints de carrosserie, pans de verre et bandes d'étanchéité pour toits ouvrants.
